# EUROPÄISCHE PATENTSCHRIFT

(11) **EP 1 487 743 B1**
(45) Veröffentlichungstag und Bekanntmachung des Hinweises auf die Patenterteilung: **29.08.2007**
(21) Anmeldenummer: 03744816.4
(22) Anmeldetag: 19.03.2003
(51) Int. Cl.: C01F 5/22, C01B 13/36, B01D 61/14

(54) **VERFAHREN UND VORRICHTUNG ZUR ERZEUGUNG EINES METALLHYDROXIDS**
METHOD AND DEVICE FOR PRODUCING A METAL HYDROXIDE
PROCEDE ET DISPOSITIF DE PRODUCTION D'UN HYDROXYDE METALLIQUE

(30) Priorität: 25.03.2002 DE 10213310
(43) Veröffentlichungstag der Anmeldung: 22.12.2004
(73) Patentinhaber: Manderscheid, Karl, 50354 Hürth (DE)
(72) Erfinder: LINDEMANN, Dr. Johannes, 53619 Rheinbreitbach (DE); MANDERSCHEID, Karl, 50354 Hürth-Fischenich (DE); SCHNEIDER, Manfred, 66740 Saarlouis (DE)
(74) Vertreter: Tongbhoyai, Martin
(86) Internationale Anmeldenummer: PCT/EP2003/002859
(87) Internationale Veröffentlichungsnummer: WO 2003/080512

(56) Entgegenhaltungen:
- DE-A- 10 001 493
- US-A- 4 865 744
- US-A- 5 385 671
- B. FRADIN, R.W. FIELD: "Crossflow microfiltration of magnesium hydroxide suspensions" SEPARATION AND PURIFICATION TECHNOLOGY, Bd. 16, Nr. 1, 10. Juni 1999 (1999-06-10), Seiten 25-45, XP002247079

## Beschreibung

Die Erfindung betrifft ein Verfahren und eine Vorrichtung zur Erzeugung eines Metallhydroxids, insbesondere Magnesiumhydroxid, nach den Oberbegriffen der Ansprüche 1 bzw. 20.

Metallhydroxide sind Rohstoffe, die in vielfältiger Weise industriell benötigt werden. Dies gilt insbesondere für Magnesiumhydroxid, das beispielsweise zur Reinigung von Rauchgasen und in der Abwasserbehandlung eingesetzt wird. Reines Magnesiumhydroxid wird insbesondere als Zuschlagstoff für Waschmittel, als Additiv in der Kunststoffverarbeitung und als pharmazeutisch wirksamer Bestandteil in Magenmitteln verwendet.

In der Natur kommen Metallhydroxide in den verschiedensten Formen vor. Beispielsweise kommt Magnesiumhydroxid als Bruzit vor. Bis heute wird es hauptsächlich aus Endlaugen der Kalisalzverarbeitung oder durch Fällung aus Meerwasser, welches im Mittel ca. 0.5% Magnesium enthält, gewonnen. Beiden Flüssigkeiten, also der Endlauge oder dem Meerwasser, werden hierzu in der Regel Kalkmilch zugesetzt, wodurch Magnesiumhydroxid aus den Flüssigkeiten gefällt wird. Anschließend wird dieses in Filterpressen abgeschieden. Ähnliche Verfahren kennt man für weitere Metallhydroxide.

Die bekannten Verfahren weisen den Nachteil auf, daß die Abscheidung des Magnesiumhydroxids wegen eines schmierigen Niederschlages in den genannten Flüssigkeiten große Filterflächen und große Filterzeiten erfordert. Dies führt zu langen und teuren Herstellungsverfahren sowie zu teuren und aufwendigen baulichen Maßnahmen bei der Herstellungsvorrichtung.

Aus de DE-A-100 01 493 ist ein Verfahren zur Erzeugung eines Metallhydroxids in Form von Magnesiumhydroxid aus einer Salzlösung bekannt. Bei dem bekannten Verfahren wird das Metall aus der Salzlösung gefällt. Die auf diese Weise entstehende salzlösungshaltige Suspension wird anschließend durch einen Filter einer Querstromfiltrationsanlage gefiltert.

Ferner ist aus der US-A-4 865 744 ein Verfahren zur Aufarbeitungen von wässrigen Farbstoffsuspensionen bekannt, bei dem eine mehrstufige Membrantrennanlage eingesetzt wird.

Der Erfindung liegt daher die Aufgabe zugrunde, ein Verfahren und eine Vorrichtung zur Erzeugung eines Metallhydroxids anzugeben, durch die eine einfache, kostengünstige und schnelle Erzeugung des Metallhydroxids in hoher Reinheit ermöglicht wird.

Diese Aufgabe wird erfindungsgemäß mit einem Verfahren zur Erzeugung eines Metallhydroxids mit den Merkmalen des Anspruchs 1 charakterisiert. Eine Vorrichtung zur Durchführung insbesondere des erfindungsgemäßen Verfahrens ist durch die Merkmale des Anspruchs 20 charakterisiert.

Bei dem erfindungsgemäßen Verfahren wird aus einer Salzlösung zunächst das Metall in Form von Hydroxid ausgefällt. Hierdurch entsteht eine Suspension. Diese Suspension wird anschließend filtriert. Hierzu wird nun eine Querstromfiltertechnik verwendet: die salzlösungshaltige Suspension wird durch einen Filter mittels der Querstromfiltertechnik gefiltert. Ein bei der Filterung der salzlösungshaltigen Suspension entstehendes Permeat wird der Querstromfiltrationsanlage wieder zugeführt, wobei es sich hier vorzugsweise um eine Rückführung des Permeats in die Querstromfiltrationsanlage handelt.

Die Erfindung beruht auf der Erkenntnis, daß die durch die Fällung erzeugten Partikel bei der Querstromfiltration aufgrund der hierbei vorhandenen turbulenten Strömungsbedingungen überwiegend im Strömungskern transportiert werden. Aufgrund der turbulenten Strömungsbedingungen wird eine gleichmäßige Auswaschung von gelösten Fremdstoffen ermöglicht. Durch die Zu- bzw. Rückführung des Permeats in die Querstromfiltrationsanlage erfolgt eine immer wiederkehrende Reinigung der das Metallhydroxid enthaltenden Lösung mit dem immer salzfreier werdenden Permeat, so daß störende Fremdstoffe in beliebiger Konzentration von dieser Lösung getrennt werden können. Die das Metallhydroxid enthaltene Suspension wird so kontinuierlich von Salzen und weiteren Stoffen befreit. Somit ist es möglich, Metallhydroxid auf einfache Weise in sehr guter Qualität zu erhalten.

Nach einer ersten Ausführungsform der Erfindung wird das Permeat eines Filters mindestens einem anderen Filter der Querstromfiltrationsanlage zugeführt. Hierunter wird vorzugsweise die Rückführung des Permeats des einen Filters zu dem anderen Filter verstanden.

Nach einer weiteren Ausführungsform der Erfindung wird die salzlösungshaltige Suspension mittels eines Membranfilters gefiltert. Vorzugsweise weist der Membranfilter Poren auf, die eine Porenweite von bis zu 30 Mikrometern haben. Bei einer besonders bevorzugten Ausführungsform beträgt die Porenweite zwischen 0.05 und 0.5 Mikrometer.

Vorzugsweise wird die Salzlösung zur Fällung des Metalls einem Reaktionsbehälter zugeführt, in dem das Metall in Form von Hydroxid ausgefällt wird. Ferner ist vorzugsweise vorgesehen, nach der Filterung ein aus dem Filter gewonnenes Konzentrat zur endgültigen Gewinnung des Metallhydroxids zu reinigen.

Bei einer besonderen Ausführungsform des erfindungsgemäßen Verfahrens ist folgendes vorgesehen: Zunächst wird die Salzlösung, die das Metall enthält, in einem Reaktionsbehälter alkalisch gemacht. Hierdurch wird das Metall in Form eines Hydroxids gefällt, das sehr feindispers in einer Suspension vorhanden ist, die durch die Fällung erzeugt wurde. Die Suspension wird vorzugsweise einem Arbeitsbehälter zugeführt, der an einer Querstromfiltrationsanlage, beispielsweise eine Ultra- oder eine Mikrofiltrationsanlage, angeschlossen ist. In dieser Anlage wird vorzugsweise über einen Membranfilter ein Permeat abgetrennt, das in Form einer metallhydroxidfreien Salzlösung vorliegt. Das Permeat wird zu einer Umkehrosmoseneinheit geleitet, sofern der Gehalt an gelösten Salzen nicht derart hoch ist, daß er von der Umkehrosmoseeinheit nicht verarbeitet werden kann. Das von dem Membranfilter zurückgehaltene Konzentrat enthält eine konzentrierte Suspension mit Metallhydroxid, die vorzugsweise wieder in den Arbeitsbehälter zurückgeleitet wird. Dem Arbeitsbehälter fließt zusätzlich Reinwasser zu, das zur Ausspülung von weiteren löslichen Salzen verwendet wird. Das Reinwasser wird vorzugsweise aus der Umkehrosmoseneinheit entnommen. Das bei der Umkehrosmose entstehende Konzentrat, das insbesondere die löslichen Salze enthält, wird ausgeschleust. Das heißt, es wird für das erfindungsgemäße Verfahren nicht mehr verwendet. Das vorstehend beschriebene Ausführungsbeispiel weist den Vorteil auf, daß die das Metallhydroxid enthaltene Suspension kontinuierlich von Salzen und weiteren Stoffen befreit wird, die als Konzentrate über die Umkehrosmoseneinheit ausgeschleust werden.

Die vorstehend genannte Ausführungsform beruht auf folgenden Überlegungen: Aufgrund der stark turbulenten Strömungsbedingungen, die Querstromfiltrationsanlagen eigen ist, wirkt der Filtrationsprozeß als Mischorgan, so daß eine sehr gleichmäßige Auswaschung von gelösten Fremdstoffen ermöglicht wird. Aufgrund der intensiven Aufmischung wird in der Suspension ein sehr kleines Korn erzeugt, da durch die turbulente Strömungsführung die Bildung von Agglomeraten in der Suspension verhindert wird und gebildete Agglomerate zerschlagen werden. Da hierdurch stationäre "Konzentrationsinseln" innerhalb eines Teilcheagglomerats verhindert werden, intensiviert und beschleunigt dieser Vorgang auch die Ausspülung von gelösten Fremdstoffen, die bei den bisher bekannten Verfahren sehr lange dauern. Durch zyklisches Hochfahren der Partikelkonzentration im Arbeitsbehälter und anschließendes Verdünnen durch Zulauf von Reinwasser kann jede beliebige Reinheitsqualität erzeugt werden, ohne daß zusätzliche Reinigungsstufen zu integrieren sind.

Bei einer weiteren Ausführungsform der Erfindung wird die salzlösungshaltige Suspension mittels mindestens zwei Filtern gefiltert, wobei ein erster Filter vor einem zweiten Filter angeordnet bzw. geschaltet ist. Vorzugsweise sind diese Filter jeweils in einer Filterstufe angeordnet, die hintereinandergeschaltet sind.

Es ist weiterhin vorzugsweise vorgesehen, daß das durch den zweiten Filter tretende Permeat zurück zu dem ersten Filter geführt wird.

Bei einer weiteren Ausführungsform des erfindungsgemäßen Verfahrens wird mindestens einem Filter bzw. mindestens einer der Filterstufen Reinwasser zur Ausspülung mindestens eines löslichen Salzes aus der Suspension zugeführt, die bei der Fällung des Metalls aus der Salzlösung entstanden ist. Desweiteren ist es von Vorteil, daß das die erste Filterstufe bzw. den ersten Filter verlassende Permeat einer Umkehrosmoseneinheit zugeführt wird, sofern die Salzkonzentrationen - wie oben bereits beschrieben - dieses zulassen. Bevorzugt wird das mittels der Umkehrosmoseneinheit gewonnene Reinwasser dem zweiten Filter bzw. der Filterstufe zugeführt. Ferner ist vorzugsweise vorgesehen, daß das den Filter der zweiten Filterstufe verlassende Permeat der ersten Filterstufe zugeführt wird. Vorzugsweise wird der ersten Filterstufe auch eine weitere Filterstufe vorgeschaltet, mit der aus der Suspension möglichst viel Salzlösung entfernt wird.

Sämtliche vorstehend genannten Ausführungsbeispiele beruhen auf dem Prinzip der Extraktion im Gegenstrom. Mehrere Querstromfiltrationsstufen werden hintereinandergeschaltet oder hintereinander betrieben (also mehrmals hintereinander benutzt), wobei der letzten Querstromfiltrationsstufe vorzugsweise ein salzfreies Permeat der Umkehrosmose zufließt. Die letzte Querstromfiltrationsstufe verläßt dann ein Konzentrat, das mit salzfreiem Permeat gewaschen wurde. Das nun nur leicht mit gelösten Salzen kontaminierte Permeat dieser Querstromfiltrationsstufe wird dann der vorherigen Querstromfiltrationsstufe zum Herauswaschen der dort vorliegenden Salze zugeführt. Durch Hintereinanderschalten von mehreren Querstromfiltrationsstufen kann mit diesem Gegenstromprozeß Metallhydroxid in quasi beliebiger Reinheit erzeugt werden. Ein weiterer Vorteil ist, daß die zur Reinigung benötigte Menge an Reinwasser reduziert wird.

Bei einer weiteren Ausführungsform des erfindungsgemäßen Verfahren erfolgt die Fällung des Metalls mittels Kalkmilch oder Natronlauge.

Die erfindungsgemäße Vorrichtung zur Durchführung insbesondere des oben beschriebenen Verfahrens ist durch die Merkmale des Anspruchs 20 charakterisiert. Sie weist mindestens einen Reaktionsbehälter oder Reaktionseinheit zur Fällung des Metalls aus der Salzlösung sowie mindestens eine Filterstufe, die mindestens einen Filter aufweist, zur Filterung der durch die Fällung entstandenen salzlösungshaltigen Suspension auf. Durch den Filter dringt ein Permeat. Ferner ist mindestens eine Leitung zur Zuführung bzw. Zurückführung des Permeats in mindestens eine der Filterstufen vorgesehen.

Nachfolgend werden Ausführungsbeispiele der Erfindung anhand von Figuren näher beschrieben. Es zeigen
- Figur 1: eine Prinzipdarstellung einer ersten Vorrichtung zur Durchführung des Verfahrens, wobei Magnesiumhydroxid aus einem Konzentrat erzeugt wird;
- Figur 2: eine Prinzipdarstellung einer zweiten Vorrichtung zur Durchführung des Verfahrens, wobei Magnesiumhydroxid aus einem Konzentrat erzeugt wird;
- Figur 3: eine Prinzipdarstellung einer dritten Vorrichtung zur Durchführung eines weiteren Verfahrens, wobei Magnesiumhydroxid aus einem Konzentrat erzeugt wird.

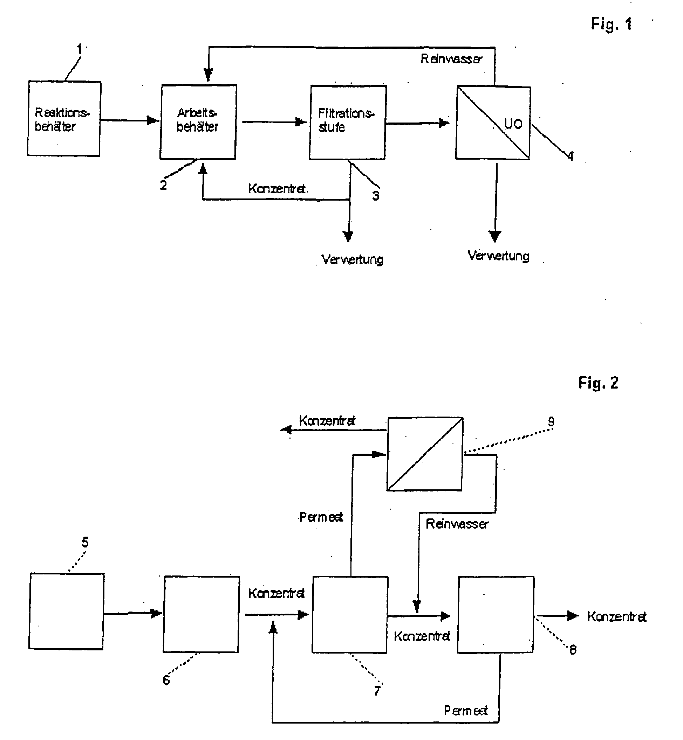

Figur 1 zeigt in einer Prinzipdarstellung eine erste erfindungsgemäße Vorrichtung zur Durchführung des erfindungsgemäßen Verfahrens, bei der Magnesiumhydroxid aus einem Konzentrat erzeugt wird. Die einzelnen Baueinheiten werden anhand der Beschreibung des erfindungsgemäßen Verfahrens näher erläutert.

Eine Magnesium enthaltende Salzlösung wird einem Reaktionsbehälter 1 zugeführt, in dem die Lösung durch Zugabe von Kalkmilch oder Natronlauge alkalisch gemacht wird. Nach Erreichen eines ph-Wertes von ca. 11.5 ist das gesamte Magnesium in Form von Hydroxid gefällt und liegt feindispers in der so entstandenen Suspension vor. Die Suspension wird sodann einem Arbeitsbehälter 2 zugeführt, der an eine Filtrationsstufe 3 angeschlossen ist. Mittels der Filtrationsstufe 3 wird ein Permeat abgetrennt, das eine magnesiumhydroxidfreie Lösung ist und die einer Umkehr-osmoseneinheit 4 zugeführt wird. Das von der Membran zurückgehaltene Konzentrat enthält im Unterschied zu der im Reaktionsbehälter hergestellten Suspension eine konzentriertere Suspension mit Magnesiumhydroxid, die wieder in den Arbeitsbehälter 2 zurückgeleitet wird. Dem Arbeitsbehälter 2 fließt zusätzlich Reinwasser zu, das zusammen mit der Filtrationsstufe 3 dazu dient, weitere Salze auszuspülen. Das Reinwasser wird der Umkehrosmoseneinheit 4 entnommen, deren Konzentrat entsorgt wird. Nach mehrmaligem Durchlauf dieses Verfahrens wird das von der Filtrationsstufe 3 zurückgehaltene Konzentrat abgeführt, das nur noch hochreines Magnesiumhydroxid enthält.

Ein weiteres Ausführungsbeispiel einer erfindungsgemäßen Vorrichtung zur Durchführung des erfindungsgemäßen Verfahrens, bei dem Magnesiumhydroxid aus einem Konzentrat erzeugt wird, ist in Figur 2 dargestellt. Die dargestellte Vorrichtung weist mehrere hintereinandergeschaltete Querstromfiltrationsstufen 6 bis 8 auf (nachfolgend jeweils Filterstufe genannt), die jeweils einen Membranfilter aufweisen. Die Porenweite des Membranfilters liegt hier zwischen 0.05 und 0.5 Mikrometern.

Die das Magnesium enthaltende Lösung wird in einem Reaktionsbehälter 5 mit Natronlauge versetzt, so daß das Magnesium in Form von Magnesiumhydroxid ausfällt. Anschließend wird die auf diese Weise entstehende Suspension einer ersten Filterstufe 6 zugeführt, mit der eine Vorfiltration vorgenommen wird. Das durch den Membranfilter der Filterstufe 6 tretende Permeat in Form von Wasser und löslichen Salzen wird in einen Kanal abgeleitet. Das aus der Filterstufe 6 erzeugte Konzentrat wird einer weiteren Filterstufe 7 zugeführt. Das Permeat dieser Filterstufe 7 wird einer Umkehrosmoseneinheit 9 zugeführt. Deren Permeat ist hochreines Wasser und wird einer weiteren Filterstufe 8 zugeführt. Das Konzentrat der Umkehrosmoseneinheit 9 wird in einen Kanal zur Entsorgung abgeleitet.

Das durch die Filterstufe 8 erzeugte Permeat weist nur noch geringe Mengen an Salzen auf und wird zum Entfernen von weiteren Salzen zurück in die Filterstufe 7 geführt, die vor der Filterstufe 8 geschaltet ist. Das durch die Filterstufe 8 erzeugte Konzentrat weist das hochreine Magnesiumhydroxid auf.

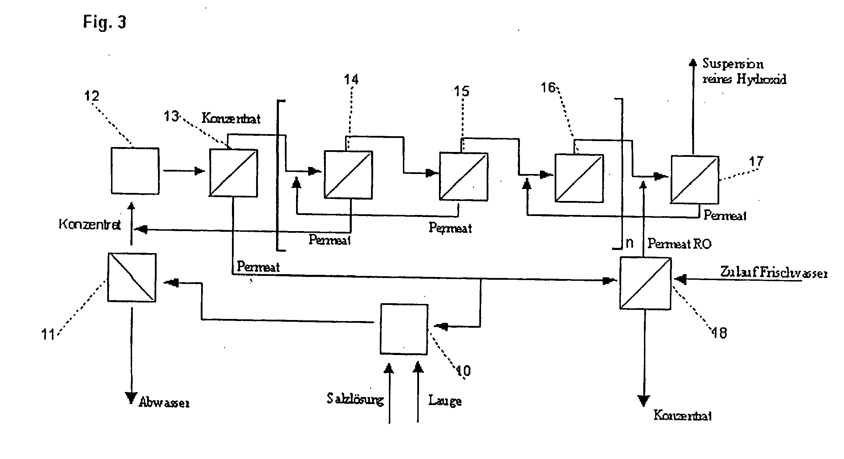

Ein weiteres Ausführungsbeispiel einer erfindungsgemäßen Vorrichtung, das das erfindungsgemäße Verfahren verwendet, zeigt Figur 3. Einer in einen Reaktionsbehälter 10 geleiteten, das Magnesium enthaltenden Salzlösung wird eine Lauge zugegeben, wodurch Magnesiumhydroxid gefällt wird. Die hierdurch entstehende salzlösungshaltige Suspension wird einer dem Reaktionsbehälter 10 nachgeschalteten Vorfiltrationsstufe 11 zugeleitet. Das bei der Vorfiltration entstehende Konzentrat wird an einen der Vorfiltrationsstufe 11 nachgeschalteten Mischer 12 weitergeleitet, auf dessen Funktion weiter unten noch näher eingegangen wird. Die bei der Vorfiltration zurückgehaltenen Reststoffe werden in das Abwasser geleitet.

Vom Mischer 12 gelangt die Suspension in mehrere hintereinandergeschaltete Filterstufen 13 bis 17, wobei immer das Konzentrat einer Filterstufe an die nachgeschaltete Filterstufe weitergeleitet wird. Das die einzelnen Filterstufen verlassende Permeat wird in jeweils verschiedene Bauteile der erfindungsgemäßen Vorrichtung zurückgeleitet, wobei es vorzugsweise in vorgeschaltete Filterstufen zurückgeleitet wird. Beispielsweise wird das Permeat der Filterstufe 15 in die Filterstufe 14 und das Permeat der Filterstufe 17 in die Filterstufe 16 zurückgeleitet. Das Permeat wird bei jeder Filterstufe immer salzfreier. Dem Mischer 12 wird das Permeat der Filterstufe 14 zugeführt, das anschließend mit dem Konzentrat der Vorfiltrationsstufe 11 im Mischer 12 vermischt wird.

Der Filterstufe 17 wird das Konzentrat der Filterstufe 16 sowie das Permeat einer Umkehrosmoseneinheit 18 zugeführt, das nahezu salzfrei ist. Der Umkehrosmoseneinheit 18 selbst wird entweder Frischwasser oder das Permeat der Filterstufe 13 zugeführt. Das Konzentrat der Filterstufe 17 ist nahezu salzfrei und enthält fast ausschließlich das hochreine Magnesiumhydroxid.

Das erfindungsgemäße Verfahren bzw. die erfindungsgemäße Vorrichtung weist den Vorteil auf, daß das nur leicht mit gelösten Salzen kontaminierte Permeat einer Filterstufe in eine vorgeschaltete Filterstufe zum Herauswaschen der dort vorliegenden Salze zurückgeführt wird. Durch Hintereinanderschalten von mehreren Filterstufen kann mit diesem Gegenstromprozeß Metallhydroxid in quasi beliebiger Reinheit erzeugt werden. Beispielsweise kann die mit der großen Klammer in Figur 3 dargestellte Anordnung von Filterstufen beliebig oft hintereinandergeschaltet werden.

### Bezugszeichenliste

- 1: Reaktionsbehälter
- 2: Arbeitsbehälter
- 3: Filtrationsstufe
- 4: Umkehrosmoseneinheit

- 5: Reaktionsbehälter
- 6: Filterstufe
- 7: Filterstufe
- 8: Filterstufe
- 9: Umkehrosmoseneinheit

- 10: Reaktionsbehälter
- 11: Vorfiltrationsstufe
- 12: Mischer
- 13: Filterstufe
- 14: Filterstufe
- 15: Filterstufe
- 16: Filterstufe
- 17: Filterstufe
- 18: Umkehrosmoseneinheit

## Patentansprüche

1. Verfahren zur Erzeugung eines Metallhydroxids, inbesondere Magnesiumhydroxid, aus einer Salzlösung, wobei ein Metall zunächst aus der Salzlösung gefällt und die auf diese Weise entstehende salzlösungshaltige Suspension anschließend durch mindestens einen Filter (3, 6 - 8, 13 - 17) einer Querstromfiltrationsanlage (3, 6 - 8, 13 - 17) gefiltert wird,
**dadurch gekennzeichnet,**
**daß** ein durch die Filterung der Suspension entstehendes Permeat der Querstromfiltrationsanlage (3, 7, 14 - 17) wieder zugeführt wird.

2. Verfahren nach Anspruch 1, **dadurch gekennzeichnet, daß** das Permeat eines der Filter (8, 15, 17) mindestens einem anderen Filter (7, 14, 16) der Querstromfiltrationsanlage zugeführt wird.

3. Verfahren nach Anspruch 1 oder 2, **dadurch gekennzeichnet, daß** die Suspension mittels eines Membranfilters gefiltert wird.

4. Verfahren nach Anspruch 3, **dadurch gekennzeichnet, daß** die Suspension mittels eines Membranfilters mit Poren gefiltert wird, deren Porenweite bis zu 30 Mikrometern beträgt.

5. Verfahren nach Anspruch 4, **dadurch gekennzeichnet, daß** die Suspension mittels eines Membranfilters mit Poren gefiltert wird, deren Porenweite zwischen 0.05 und 0.5 Mikrometer liegt.

6. Verfahren nach mindestens einem der vorangehenden Ansprüche, **dadurch gekennzeichnet, daß** die Salzlösung zur Fällung des Metalls einem Reaktionsbehälter (1, 5, 10) zugeführt wird, in der das Metall in Form von Metallhydroxid ausgefällt wird.

7. Verfahren nach mindestens einem der vorangehenden Ansprüche, **dadurch gekennzeichnet, daß** ein aus dem Filter (8, 17) gefiltertes Konzentrat zur Gewinnung des Metallhydroxids gereinigt wird.

8. Verfahren nach mindestens einem der vorangehenden Ansprüche, **dadurch gekennzeichnet, daß** die Suspension mittels mindestens zwei Filtern (6 - 8, 13 - 17) gefiltert wird, wobei ein erster vor einem zweiten Filter (6 - 8, 13 - 17) angeordnet ist.

9. Verfahren nach Anspruch 8, **dadurch gekennzeichnet, daß** das durch den zweiten Filter (8, 15, 17) tretende Permeat zurück zu dem ersten Filter (7, 14, 16) geführt wird.

10. Verfahren nach Anspruch 9, **dadurch gekennzeichnet, daß** ein am zweiten Filter (8, 15, 17) entstehendes Konzentrat in einer Reinigungseinheit zur Gewinnung von Metallhydroxid gereinigt wird.

11. Verfahren nach mindestens einem der Ansprüche 8 bis 10, **dadurch gekennzeichnet, daß** mindestens einem der Filter (8) Reinwasser zur Ausspülung von mindestens einem löslichen Salz zugeführt wird.

12. Verfahren nach mindestens einem der Ansprüche 8 bis 11, **dadurch gekennzeichnet, daß** das durch den ersten Filter (7) tretende Permeat einer Umkehrosmoseneinheit (9) zugeführt wird.

13. Verfahren nach Anspruch 12, **dadurch gekennzeichnet, daß** das mittels der Umkehrosmoseneinheit (9) gewonnene Reinwasser dem zweiten Filter (8) zugeführt wird.

14. Verfahren nach mindestens einem der Ansprüche 8 bis 13, **dadurch gekennzeichnet, daß** die Suspension mittels des ersten und des zweiten Filters (3, 6 - 8, 13 - 17) gefiltert wird, wobei die Filter (3, 6 - 8, 13 - 17) in jeweils einer Filterstufe angeordnet sind und eine erste Filterstufe vor einer zweiten Filterstufe angeordnet ist.

15. Verfahren nach Anspruch 14, **dadurch gekennzeichnet, daß** das durch den Filter (8) der zweiten Filterstufe tretende Permeat der ersten Filterstufe zugeführt wird.

16. Verfahren nach Anspruch 14 oder 15, **dadurch gekennzeichnet, daß** der ersten Filterstufe eine weitere Filterstufe (6) vorgeschaltet ist, mit der die Suspension vorgefiltert wird.

17. Verfahren nach Anspruch 16, **dadurch gekennzeichnet, daß** das Konzentrat der weiteren Filterstufe (6) in die erste Filterstufe geleitet wird und daß das Permeat der weiteren Filterstufe (6) einer Umkehrosmoseneinheit zugeführt wird.

18. Verfahren nach Anspruch 17, **dadurch gekennzeichnet, daß** das Permeat der Umkehrosmoseneinheit in die Reinigungseinheit gemäß Anspruch 11 geleitet wird.

19. Verfahren nach mindestens einem der vorangehenden Ansprüche, **dadurch gekennzeichnet, daß** die Fällung des Metalls mittels Kalkmilch oder Natronlauge erfolgt.

20. Vorrichtung zur Durchführung eines Verfahrens zur Erzeugung eines Metallhydroxids, inbesondere Magnesiumhydroxid, aus einer Salzlösung, wobei ein Metall zunächst aus der Salzlösung gefällt und die auf diese Weise salzlösungshaltige Suspension anschließend gefiltert wird, mit
- mindestens einem Reaktionsbehälter (1, 5, 10) zur Fällung des Metalls aus der Salzlösung,
- mindestens einer Querstromfiltrationseinheit mit mindestens einem Filter (3, 6 - 8, 13 - 17) zur Filterung der Suspension, durch den ein Permeat dringt,
**dadurch gekennzeichnet,**
**daß** mindestens eine Leitung zur Zurückführung des Permeats in die oder eine weitere Querstromsfiltrationseinheit (7) vorgesehen ist.

## Claims

1. A method for producing a metal hydroxide, in particular magnesium hydroxide, from a salt solution, a metal firstly being precipitated out of the salt solution and the salt-solution-containing suspension arising in this way then being filtered through at least one filter (3, 6-8, 13-17) of a cross-flow filtration system (3, 6-8, 13-17)
**characterised in that**
a permeate arising through filtration of the suspension is returned to the cross-flow filtration system (3, 7, 14-17).

2. A method according to claim 1, **characterised in that** the permeate from one of the filters (8, 15, 17) is fed to at least one other filter (7, 14, 16) of the cross-flow filtration system.

3. A method according to claim 1 or claim 2, **characterised in that** the suspension is filtered by means of a membrane filter.

4. A method according to claim 3, **characterised in that** the suspension is filtered by means of a membrane filter with pores whose pore size amounts to up to 30 micrometres.

5. A method according to claim 4, **characterised in that** the suspension is filtered by means of a membrane filter with pores whose pore size lies between 0.05 and 0.5 micrometres.

6. A method according to at least one of the preceding claims, **characterised in that** the salt solution is fed for precipitation of the metal to a reaction vessel (1, 5, 10), in which the metal is precipitated in the form of metal hydroxide.

7. A method according to at least one of the preceding claims, **characterised in that** a concentrate filtered out of the filter (8, 17) is purified to recover the metal hydroxide.

8. A method according to at least one of the preceding claims, **characterised in that** the suspension is filtered by means of at least two filters (6-8, 13-17), a first filter being arranged upstream of a second filter (6-8, 13-17).

9. A method according to claim 8, **characterised in that** the permeate passing through the second filter (8, 15, 17) is fed back to the first filter (7, 14, 16).

10. A method according to claim 9, **characterised in that** a concentrate arising at the second filter (8, 15, 17) is purified in a purification unit to recover metal hydroxide.

11. A method according to at least one of claims 8 to 10, **characterised in that** clean water is fed to at least one of the filters (8) to rinse out at least one soluble salt.

12. A method according to at least one of claims 8 to 11, **characterised in that** the permeate passing through the first filter (7) is fed to a reverse osmosis unit (9).

13. A method according to claim 12, **characterised in that** the clean water obtained by means of the reverse osmosis unit (9) is fed to the second filter (8).

14. A method according to at least one of claims 8 to 13, **characterised in that** the suspension is filtered by means of the first and second filters (3, 6-8, 13-17), the filters (3, 6-8, 13-17) being arranged in in each case one filter stage and a first filter stage being arranged upstream of a second filter stage.

15. A method according to claim 14, **characterised in that** the permeate passing through the filter (8) of the second filter stage is fed to the first filter stage.

16. A method according to claim 14 or claim 15, **characterised in that** upstream of the first filter stage there is connected a further filter stage (6), with which the suspension is prefiltered.

17. A method according to claim 16, **characterised in that** the concentrate from the further filter stage (6) is passed into the first filter stage and **in that** the permeate from the further filter stage (6) is fed to a reverse osmosis unit.

18. A method according to claim 17, **characterised in that** the permeate from the reverse osmosis unit is passed into the purification unit according to claim 11.

19. A method according to at least one of the preceding claims, **characterised in that** precipitation of the metal takes place by means of milk of lime or sodium hydroxide solution.

20. A device for performing a method for producing a metal hydroxide, in particular magnesium hydroxide, from a salt solution, a metal firstly being precipitated out of the salt solution and the salt-solution-containing suspension arising in this way then being filtered, said device having
- at least one reaction vessel (1, 5, 10) for precipitating the metal out of the salt solution,
- at least one cross-flow filtration unit with at least one filter (3, 6-8, 13-17) for filtering the suspension, through which filter a permeate penetrates,
**characterised in that**
at least one line is provided for returning the permeate into the or a further cross-flow filtration unit (7).

## Revendications

1. Procédé de production d'un hydroxyde métallique, notamment de l'hydroxyde de magnésium, à partir d'une solution saline, dans lequel un métal est dans un premier temps précipité à partir de la solution saline, la suspension saline ainsi obtenue étant ensuite filtrée à travers au moins un filtre (3, 6 à 8, 13 à 17) d'une installation de filtration tangentielle (3, 6 à 8, 13 à 17)
**caractérisé en ce que**
le perméat obtenu par filtration de la suspension est réintroduit dans l'installation de filtration tangentielle (3, 7, 14 à 17).

2. Procédé selon la revendication 1, **caractérisé en ce que** le perméat d'un des filtres (8, 15, 17) est acheminé vers au moins un autre filtre (7, 14, 16) de l'installation de filtration tangentielle.

3. Procédé selon la revendication 1 ou la revendication 2, **caractérisé en ce que** la suspension est filtrée au moyen d'un filtre à membrane.

4. Procédé selon la revendication 3, **caractérisé en ce que** la suspension est filtrée au moyen d'un filtre à membrane dont le diamètre des pores peut atteindre 30 micromètres.

5. Procédé selon la revendication 4, **caractérisé en ce que** la suspension est filtrée au moyen d'un filtre à membrane dont le diamètre des pores est compris entre 0,05 et 0,5 micromètre.

6. Procédé selon l'une au moins des revendications précédentes, **caractérisé en ce que** la solution saline servant à la précipitation du métal est introduite dans un réacteur (1, 5, 10) dans lequel le métal est précipité sous forme d'hydroxyde métallique.

7. Procédé selon une ou plusieurs des revendications précédentes, **caractérisé en ce qu'**un concentrat retenu par le filtre (8, 17) est purifié pour obtenir un hydroxyde métallique.

8. Procédé selon une ou plusieurs des revendications précédentes, **caractérisé en ce que** la suspension est filtrée au moyen d'au moins deux filtres (6 à 8, 13 à 17), un premier filtre (6 à 8, 13 à 17) étant agencé en amont d'un second filtre (6 à 8, 13 à 17).

9. Procédé selon la revendication 8, **caractérisé en ce que** le perméat traversant le second filtre (8, 15, 17) est renvoyé vers le premier filtre (7, 14, 16).

10. Procédé selon la revendication 9, **caractérisé en ce qu'**un concentrat obtenu au niveau du second filtre (8, 15, 17) est purifié dans une unité de purification pour obtenir un hydroxyde métallique.

11. Procédé selon une ou plusieurs des revendications 8 à 10, **caractérisé en ce qu'**au moins un des filtres (8) est alimenté en eau pure pour l'élimination par rinçage d'au moins un sel soluble.

12. Procédé selon une ou plusieurs des revendications 8 à 11, **caractérisé en ce que** le perméat traversant le premier filtre (7) est envoyé vers une unité d'osmose inverse (9).

13. Procédé selon la revendication 12, **caractérisé en ce que** l'eau pure obtenue au moyen de l'unité d'osmose inverse (9) est envoyée au second filtre (8).

14. Procédé selon une ou plusieurs des revendications 8 à 13, **caractérisé en ce que** la suspension est filtrée au moyen du premier et du second filtre (3, 6, à 8, 13 à 17), les filtres (3, 6 à 8, 13 à 17) étant agencés chacun dans un étage de filtration et un premier étage de filtration étant agencé en amont d'un second étage de filtration.

15. Procédé selon la revendication 14, **caractérisé en ce que** le perméat traversant le filtre (8) du second étage de filtration est envoyé au premier étage de filtration.

16. Procédé selon la revendication 14 ou 15, **caractérisé en ce qu'**en amont du premier étage de filtration est agencé un étage de filtration supplémentaire (6) permettant de préfiltrer la suspension.

17. Procédé selon la revendication 16, **caractérisé en ce que** le concentrat obtenu au niveau de l'étage de filtration supplémentaire (6) est envoyé vers le premier étage de filtration et **en ce que** le perméat obtenu au niveau dudit étage de filtration supplémentaire (6) est envoyé vers une unité d'osmose inverse.

18. Procédé selon la revendication 17, **caractérisé en ce que** le perméat obtenu dans l'unité d'osmose inverse est envoyé à l'unité de purification selon la revendication 11.

19. Procédé selon une ou plusieurs des revendications précédentes, **caractérisé en ce que** le métal est précipité par du lait de chaux ou de la soude caustique.

20. Dispositif pour la mise en oeuvre d'un procédé de production d'un hydroxyde métallique, notamment de l'hydroxyde de magnésium, à partir d'une solution saline, dans lequel un métal est dans un premier temps précipité à partir de la solution saline, la suspension saline ainsi obtenue étant ensuite filtrée, ledit dispositif comprenant
- au moins un réacteur (1, 5, 10) pour faire précipiter le métal à partir de la solution saline,
- au moins une unité de filtration tangentielle avec au moins un filtre (3, 6 à 8, 13 à 17) de filtration de la suspension, à travers lequel passe un perméat,
**caractérisé en ce que**
il est prévu au moins un conduit de recyclage du perméat vers la ou une autre unité de filtration tangentielle (7).
